# EUROPEAN PATENT SPECIFICATION

(11) **EP 0 937 629 B1**
(45) Date of publication and mention of the grant of the patent: **17.12.2003**
(21) Application number: 99300226.0
(22) Date of filing: 14.01.1999
(51) Int. Cl.: B62D 25/16

(54) **A mudguard bracket assembly**
Kotflügelhaltevorrichtung
Serrage pour un garde-boue

(30) Priority: 21.02.1998 GB 9803612
(43) Date of publication of application: 25.08.1999
(73) Proprietor: Boydell & Jacks Limited, Burnley, Lancashire BB11 2HW (GB)
(72) Inventor: Jacks, Stephen Andrew, Nelson, Lancashire BB9 8RF (GB); Crank, Robert, Wigan WN5 8EQ (GB)
(74) Representative: Every, David Aidan

(56) References cited:
- EP-A1- 0 411 342
- DE-A1- 2 921 160
- DE-A1- 3 045 325
- DE-A1- 3 443 279
- GB-A- 1 101 550
- US-A- 4 377 294

## Description

The present invention relates to a mudguard bracket assembly that is used to fix a mudguard to a support member on a vehicle such that the mudguard is suspended over a wheel of the vehicle.

Mudguards on commercial or heavy goods vehicles are generally suspended above the vehicle wheels from a pair of spaced tubular arms or bars that project outwards from the vehicle chassis in a direction that is substantially parallel to the vehicle wheel axles. Each mudguard is releasably fixed to the support arms by a plurality of bracket assemblies, see for instance DE 3 045 325 A.

A conventional bracket assembly comprises an elongate upper saddle plate that is seated over the support arm and part of the upper, convex surface of the mudguard, and a lower, flat back plate on the underside of the mudguard. The mudguard is effectively sandwiched between the upper saddle plate and the lower back plate, the plates being secured together by nuts and bolts with the mudguard in place on the vehicle. Generally each bracket assembly requires six nut and bolt pairs and therefore twelve fixings are required to suspend each mudguard. It will thus be appreciated that it is extremely time consuming to assemble four or more mudguards to a vehicle particularly when one considers that there is restricted access between the wheel and the mudguard. In addition, the plates of the bracket assembly have a tendency to trap water in wet conditions and since they are generally constructed from metal they often deteriorate and look unsightly as a result of rust.

An alternative known bracket assembly is similar to the one described above except that each upper saddle plate is replaced by a pair of U-shaped clamping bars that sit over the support arm, pass through apertures in the mudguard and are connected to each end of the back plate. The free ends of the U-shaped members are threaded to receive nuts. In comparison to the design referred to above this design reduces the tendency to rust and has fewer fixings, but the number of components to assemble together is increased.

A further known bracket assembly comprises a two-piece metal clamping member that is mounted on the upper surface of the mudguard. It comprises a first portion that is riveted or otherwise connected to the mudguard and which provides a seat for the support arm. A second portion is pivotally connected to the first member and is shaped so as to pass over the support arm and to fasten to the first portion on the opposite side of the arm to the pivot. This arrangement eliminates the need to secure a plate to the underside of the mudguard but still has the drawbacks that four clamping members are required per mudguard, there is a tendency for it to rust and it is generally heavy to support the load.

In addition to the disadvantages mentioned above, none of the prior designs is particularly aesthetically pleasing or visually complementary to the mudguard design.

It is an object of the present invention to obviate or mitigate the aforesaid disadvantages.

According to a first aspect of the present invention there is provided a mudguard bracket assembly for connecting a mudguard to a support member of a vehicle, the assembly comprising a first bracket portion for connection to the support member and a second bracket portion for releasably securing the first bracket portion to the mudguard so that, when assembled, a part of the mudguard lies between the first and second bracket portions, characterised in that the first bracket portion comprises an aperture for receiving the support member and the assembly further comprises a clamping member moveable between a first position in which it projects into said aperture so as, in use, to clamp against the support member and a second position in which it substantially clear of the aperture so as to allow release or receipt of the support arm, at least one of the bracket portions having a raised portion designed to bias the clamping member into said first position when the second bracket portion is securely fastened to the first bracket portion.

This arrangement provides for a simplified way of assembling a mudguard to a vehicle and provides for improved clamping. The improved clamping enables the number of fixings to be reduced in comparison to most existing bracket assembly designs. Moreover, it permits the bracket to be assembled to the mudguard before the mudguard is then mounted on the vehicle. This clearly eliminates the problem of having to insert and tighten fixings with the mudguard in place on the vehicle. In any event, mounting of the bracket assembly on the mudguard in-situ is relatively simple since no tools are required to secure fixings on the underside of the mudguard.

The clamping member may be in the form of a hinged member that is integral with first bracket portion. The hinged member preferably co-operates with and, during clamping, bears against the projecting element which forms part of the second bracket portion.

In a preferred embodiment the second bracket portion is a plate with a central raised section that forms the raised portion referred to above.

The first bracket portion may have a central portion with an aperture that is flanked by end portions with apertures for receiving fixings. The second bracket portion preferably has threaded studs that pass through the apertures in the end portions of the first bracket portion.

The end portions may conveniently have hinged covers that are pivotal about hinges so as to cover the fixing apertures.

According to a second aspect of the present invention there is provided a mudguard assembly comprising a mudguard, a support member and at least one mudguard bracket assembly as defined above.

A specific embodiment of the present invention will now be described, by way of example only, with reference to the accompanying drawings in which:
Figure 1 is a perspective end view of a vehicle mudguard fitted with four mudguard bracket assemblies of the present invention;
Figure 2 is a scrap perspective view of the end of the mudguard hidden in figure 1;
Figure 3 is an exploded perspective view of a mudguard bracket assembly in accordance with the present invention;
Figure 4 is an exploded side view of the bracket assembly of figure 3;
Figure 5 is a plan view of the assembled mudguard assembly;
Figure 6 is an assembled view of the mudguard bracket assembly of figure 3, with part of the mudguard shown;
Figure 7 is a scrap view of the assembly of figure 6 shown in a clamped configuration; and
Figure 8 is a scrap sectioned view along line X-X of figure 6.

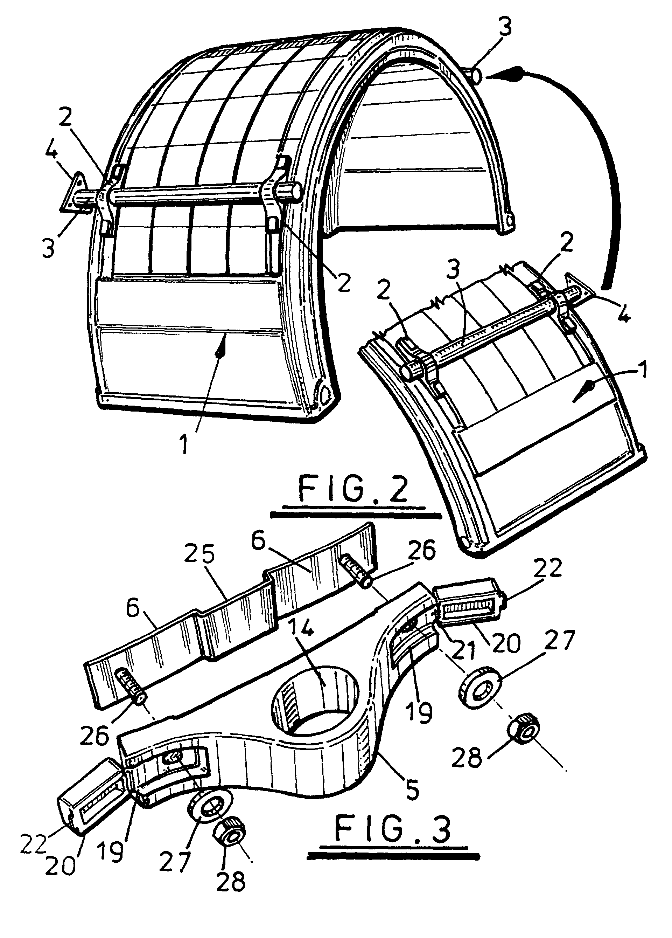

Referring now to the drawings, figures 1 and 2 show a mudguard 1 for a vehicle wheel, complete with bracket assemblies 2, in the form it is mounted on the vehicle (which is not shown for clarity).

The mudguard 1 is suspended above the vehicle wheel (not shown) by two spaced tubular support bars 3 that are fixed to the vehicle chassis by a mounting plate 4 and appropriate bolts (not shown). In alternative designs (not shown) the support bars may be welded directly to the vehicle chassis rather than using mounting plates. The mudguard 1 is secured to the support bars 3 by two pairs of spaced bracket assemblies 2, each pair being disposed on opposite sides of the vertex of the mudguard 1.

A bracket assembly 2 is shown in detail in figures 3 to 8 and comprises an upper bracket 5 for receiving the support bar 3 and a lower back plate 6 by which the upper bracket 5 is secured to the mudguard 1.

The upper bracket 5 is a one-piece substantially hollow plastics moulding having upper, side and end walls 6, 7, 8 that define a central body 9 flanked by terminal feet 10. Strengthening webs (hidden in the drawings) are provided in the hollow between the upper and side walls 6, 7 to ensure that the upper bracket 5 is sufficiently robust and able to take the mudguard load. The bottom edge 11 of each side wall 7 is slightly upwardly curved so as to follow the curvature of the mudguard on which the bracket assembly 2 is mounted. The upper wall 6 has an arcuate peak 12 and arcuate ramps 13 that extend downwardly on each side to meet an upper surface of the terminal feet 10.

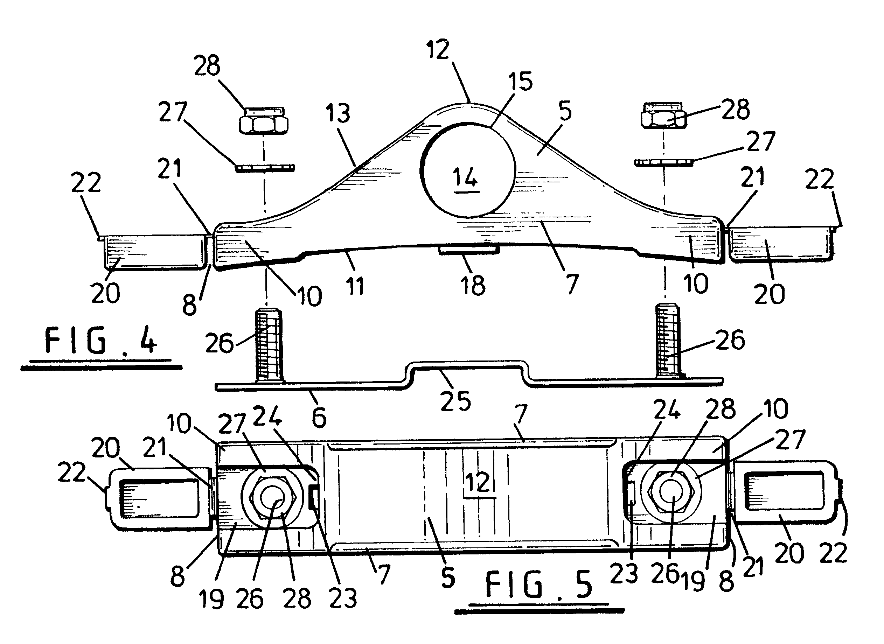

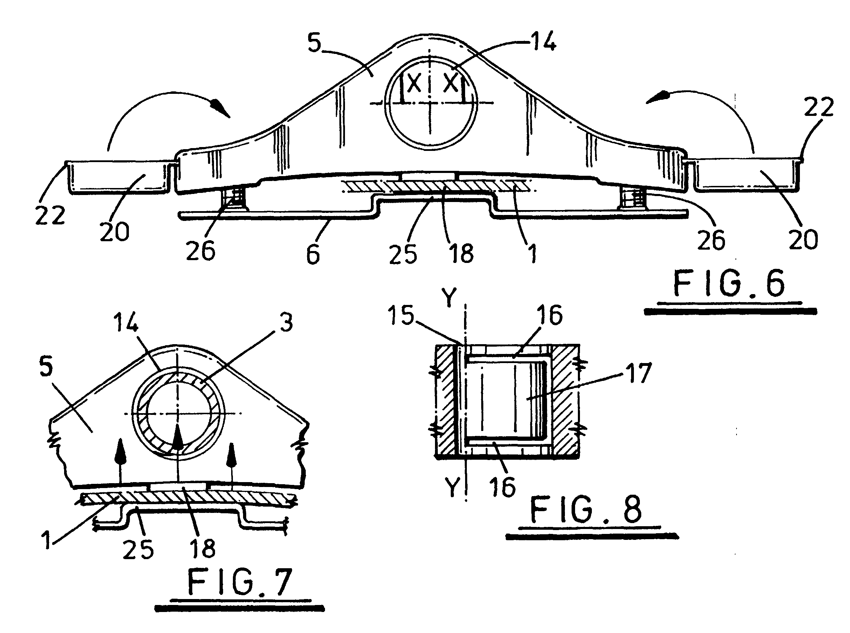

A transverse circular aperture 14 is provided in the central body 9 for receiving the support bar 3. The wall 15 of this aperture 14 is slotted (indicated by reference number 16) as shown in figure 8 to define an arcuate tongue 17 that is hingedly moveable about a line represented by that marked Y-Y in the drawings. The underside of the tongue 17 (hidden by the side walls 7 in the drawings) has an integral depending cam follower block 18 that projects below the bottom edge 11 of each side wall 7 as can be seen in figures 4, 6 and 7.

The terminal feet 10 are each apertured so as to receive fixings and the upper wall 6 is recessed indicated by reference numeral 19 in figures 3 and 5 at each of the terminal feet 10 so as to accommodate those fixings. Immediately adjacent each recess 19 there is a hood 20 that is connected to each end wall 8 by an integral moulded hinge 21 and is configured so as to be pivoted about the hinge 21 (as indicated by the arrows in figure 6) until it is received in the recess 19. The free end of the hood 20 has a projecting lip 22 that is designed to be received in snap-fit engagement with a corresponding aperture 23 provided in an adjacent wall 24 of the recess 19 when the hood 20 is fully received therein.

The back plate 6 is substantially planar save for a central raised cam platform 25. At each end of the back plate 6, either side of the cam platform 25, there are upstanding threaded studs 26 for engagement with the bracket 5.

To assemble the bracket assembly 2 to the mudguard 1, a pair of spaced holes (not shown) are drilled in the mudguard 1 so as to align with the apertures in the feet 10 of the bracket 5 and the studs 26 on the back plate 6. The back plate 6 is then presented to the underside of the mudguard 1 so that the studs 26 pass through the holes drilled in the mudguard 1 and project from the upper surface thereof. The back plate 6 is then held in position whilst the bracket 5 is presented to the upper surface of the mudguard 1 so that the projecting studs 26 of the back plate 6 are received in the apertures of the feet 10. The assembly is held together by securing a washer 27 and a nut 28 to each stud 26 but at this stage they are not fully tightened. When the four bracket assemblies 2 are in position on the mudguard 1, the assembly is then presented to the support bars 3 so that the latter pass through the apertures 14 in each central body portion 9 of each pair of bracket assemblies 2. When the mudguard 1 is in place the nuts 28 are then tightened fully to clamp the bracket assembly 2 to the support bar 3. As the nuts 28 are tightened they draw the studs 26 and the back plate 6 towards the bracket 5. This has the effect of causing the central cam platform 25 of the back plate 6 to apply pressure against the mudguard 1 such that it deforms locally slightly and bears against the cam follower block 18. The cam follower block 18 and tongue 17 are then forced to pivot about the hinge (represented by line Y-Y in figure 8) so that the tongue 17 projects into the central body aperture 14 and applies a clamping force to the support bar 3. Once the nuts 28 have been tightened sufficiently the hoods 20 are pivoted and snap-engaged in the recesses 19 so as to protect the fixings from the ingress of water or moisture.

The invention as embodied by the example described above provides for a bracket assembly that is easy to fit to a mudguard and renders the instalment of the mudguard on the vehicle a relatively simple operation. In addition the construction of the bracket assembly and in particular the provision of the hoods 20 prevents rusting of the bracket assembly or the fixings. Finally, the bracket assembly is aesthetically configured so that it complements the appearance of the mudguard.

It will be appreciated that numerous modifications to the above described design may be made without departing from the scope of the invention as defined in the appended claims. For example, the clamping tongue may take any appropriate form that provides for a clamping force to be applied to the support arm when the bracket is fully assembled and tightened in place. The tongue may be replaced by a plurality of hinged fingers that are moveable by a cam follower to project into the aperture when the bracket assembly is tightened. Alternatively, the tongue and cam follower block may be replaced by a separate sliding chock that is retained between the back plate and the bracket. In this latter embodiment the chock slides upwards into the aperture to bear against the support arm when the bracket assembly is in the clamped configuration. The cam platform 25 of the back plate 6 may be replaced by any form of projecting element or raised portion that interacts with the clamping tongue during final assembly. For example, the back plate 6 may simply be curved so that the central portion is raised and biases the tongue when the bracket is fully assembled.

## Claims

1. A mudguard bracket assembly for connecting a mudguard (1) to a support member (3) of a vehicle, the assembly comprising a first bracket portion (5) for connection to the support member (3) and a second bracket portion (6) for releasably securing the first bracket portion (5) to the mudguard (1) so that, when assembled, a part of the mudguard lies between the first and second bracket portions, **characterised in that** the first bracket portion (5) comprises an aperture (14) for receiving the support member (3) and the assembly further comprises a clamping member (17, 18) moveable between a first position in which it projects into said aperture (14) so as, in, use, to clamp against the support member (3) and a second position in which it is substantially clear of the aperture (14) so as to allow release or receipt of the support member, at least one of the bracket portions (5,6) having a raised portion (25) designed to bias the clamping member (17, 18) into said first position when the second bracket portion (6) is securely fastened to the first bracket portion (5).

2. A mudguard bracket assembly according to claim 1, wherein the clamping member (17, 18) is in the form of a hinged member that is integral with the first bracket portion (5).

3. A mudguard bracket assembly according to claim 2, wherein the hinged member (17, 18) co-operates with and during clamping bears against the raised portion (25) which forms part of the second bracket portion (6).

4. A mudguard bracket assembly according to any one of claims 1 to 3, wherein the second bracket portion (6) is a plate with a raised section that forms the raised portion (25).

5. A mudguard bracket assembly according to any one of the preceding claims, wherein the first bracket portion (5) has a central portion (9) with said aperture (14) that is flanked by end portions (10) having apertures for receiving fixings (26, 27, 28)

6. A mudguard bracket assembly according to claim 5, wherein the second bracket portion (6) has threaded studs (26) that pass through the apertures in the end portions (10) of the first bracket portion (5).

7. A mudguard bracket assembly according to claim 5 or 6, wherein the end portions (10) have hinged covers (20) that are pivotal about hinges (21 ) so as to cover the fixing apertures.

8. A mudguard assembly comprising a mudguard (1), a support member (3) and at least one mudguard bracket assembly as defined in any one of claim 1 to 7, the mudguard connectable to the support member by the at least one mudguard bracket assembly.

## Patentansprüche

1. Kotflügelhalterungsbaugruppe zum Verbinden eines Kotflügels (1) mit einem Stützelement (3) eines Fahrzeugs, wobei die Baugruppe einen ersten Halterungsabschnitt (5) zum Verbinden mit dem Stützelement (3) und einen zweiten Halterungsabschnitt (6) zum lösbaren Befestigen des ersten Halterungsabschnitts (5) am Kotflügel (1) umfaßt, so daß im zusammengebauten Zustand ein Teil des Kotflügels zwischen dem ersten und dem zweiten Halterungsabschnitt liegt, **dadurch gekennzeichnet, daß** der erste Halterungsabschnitt (5) eine Öffnung (14) zum Aufnehmen des Stützelements (3) umfaßt und die Baugruppe außerdem ein Klemmelement (17, 18) umfaßt, beweglich zwischen einer ersten Position, in der es in die Öffnung (14) vorsteht, um so bei Anwendung gegen das Stützelement (3) zu klemmen, und einer zweiten Position, in der es wesentlich entfernt von der Öffnung (14) ist, um so ein Freigeben oder Aufnehmen des Stützelements zu ermöglichen, wobei wenigstens einer der Halterungsabschnitte (5, 6) einen erhöhten Abschnitt (25) hat, gestaltet, um das Klemmelement (17, 18) in die erste Position vorzuspannen, wenn der zweite Halterungsabschnitt (6) sicher am ersten Halterungsabschnitt (5) befestigt wird.

2. Kotflügelhalterungsbaugruppe nach Anspruch 1, bei der das Klemmelement (17, 18) die Form eines schwenkbaren Elements hat, das mit dem ersten Halterungsabschnitt (5) integriert ist.

3. Kotflügelhalterungsbaugruppe nach Anspruch 2, bei der das schwenkbare Element (17, 18) mit dem erhöhten Abschnitt (25) zusammenwirkt und während des Klemmens an demselben anliegt, der einen Teil des zweiten Halterungsabschnitts (6) bildet.

4. Kotflügelhalterungsbaugruppe nach einem der Ansprüche 1 bis 3, bei welcher der zweite Halterungsabschnitt (6) eine Platte mit einem erhöhten Teilstück ist, das den erhöhten Abschnitt (25) bildet.

5. Kotflügelhalterungsbaugruppe nach einem der vorhergehenden Ansprüche, bei welcher der erste Halterungsabschnitt (5) einen Mittelabschnitt (9) mit der Öffnung (14) hat, der durch Endabschnitte (10) flankiert wird, die Öffnungen zum Aufnehmen von Befestigungen (26, 27, 28) haben.

6. Kotflügelhalterungsbaugruppe nach Anspruch 5, bei welcher der zweite Halterungsabschnitt (6) Gewindezapfen (26) hat, die durch die Öffnungen in den Endabschnitten (10) des ersten Halterungsabschnitts (5) gehen.

7. Kotflügelhalterungsbaugruppe nach Anspruch 5 oder 6, bei der die Endabschnitte (10) schwenkbare Abdeckungen (20) haben, die um Scharniere (21) geschwenkt werden können, um so die Befestigungsöffnungen abzudecken.

8. Kotflügelbaugruppe, die einen Kotflügel (1), ein Stützelement (3) und wenigstens eine Kotflügelhalterungsbaugruppe nach einem der Ansprüche 1 bis 7 umfaßt, wobei der Kotflügel durch die wenigstens eine Kotflügelhalterungsbaugruppe mit dem Stützelement verbunden werden kann.

## Revendications

1. Assemblage de console pour un garde-boue destiné à raccorder un garde-boue (1) à un élément de support (3) d'un véhicule, l'assemblage comprenant une première partie de console (5) destinée à être raccordée à l'élément de support (3), et une deuxième partie de console (6) destinée à fixer de manière amovible la première partie de console (5) au garde-boue (1), de sorte qu'après l'assemblage, une partie du garde-boue est agencée entre les première et deuxième parties de console, **caractérisé en ce que** la première partie de la console (5) comprend une ouverture (14) destinée à recevoir l'élément de support (3), l'assemblage comprenant en outre un élément de serrage (17, 18), pouvant être déplacé entre une première position, dans laquelle il déborde dans ladite ouverture (14), de sorte à exercer en service un serrage contre l'élément de support (3), et une deuxième position, dans laquelle il est pratiquement dégagé de l'ouverture (14), de sorte à permettre le dégagement ou la réception de l'élément de support, au moins une des parties de la console (5,6) comportant une partie surélevée (25), destinée à pousser l'élément de serrage (17, 18) dans ladite première position lorsque la deuxième partie de la console (6) est fermement fixée sur la première partie de la console (5).

2. Assemblage de console pour un garde-boue selon la revendication 1, dans lequel l'élément de serrage (17, 18) est constitué par un élément à charnière faisant partie intégrante de la première partie de la console (5).

3. Assemblage de console pour un garde-boue selon la revendication 2, dans lequel l'élément à charnière (17, 18) coopère avec la partie surélevée (25) et repose au cours du serrage contre celle-ci, la partie surélevée faisant partie de la deuxième partie de la console (6).

4. Assemblage de console pour un garde-boue selon l'une quelconque des revendications 1 à 3, dans lequel la deuxième partie de la console (6) est une plaque avec une section surélevée constituant la partie surélevée (25).

5. Assemblage de console pour un garde-boue selon l'une quelconque des revendications précédentes, dans lequel la première partie de la console (5) comporte une partie centrale (9), ladite ouverture (14) flanquée par des parties d'extrémité (10) comportant des ouvertures destinées à recevoir des éléments de fixation (26, 27, 28).

6. Assemblage de console pour un garde-boue selon la revendication 5, dans lequel la deuxième partie de la console (6) comporte des goujons filetés (26) traversant les ouvertures dans les parties d'extrémité (10) de la première partie de la console (5).

7. Assemblage de console pour un garde-boue selon les revendications 5 ou 6, dans lequel les parties d'extrémité (10) comportent des couvercles à charnière (20) pouvant pivoter autour de charnières (21 ) pour recouvrir les ouvertures de fixation.

8. Assemblage de garde-boue comprenant un garde-boue (1), un élément de support (3) et au moins un assemblage de console pour garde-boue comme défini dans l'une quelconque des revendications 1 à 7, le garde-boue pouvant être raccordé à l'élément de support par le au moins un assemblage de console.
